# EUROPÄISCHE PATENTANMELDUNG

(11) **EP 4 094 968 A1**
(43) Veröffentlichungstag der Anmeldung: **30.11.2022**
(21) Anmeldenummer: 21176367.7
(22) Anmeldetag: 27.05.2021
(51) Int. Cl.: B60K 17/36

(54) **DIFFERENTIALGETRIEBE FÜR EIN AUTOMOBIL**

(71) Anmelder: Blue Technologies BV, 4387 PK Vlissingen (NL)
(72) Erfinder: BENNER, Moritz, 61273 Wehrheim (DE)
(74) Vertreter: Wunderlich & Heim Patentanwälte Partnerschaftsgesellschaft mbB

(57) **Zusammenfassung**

Die Erfindung betrifft eine Differentialgetriebeanordnung für ein Automobil zum Verteilen eines Antriebsdrehmoments auf mindestens zwei Räder, mit einem Getriebegehäuse, einer Antriebswelle, welche ein Antriebsdrehmoment in das Getriebegehäuse einleitet, und mindestens zwei gegenüberliegenden und am Getriebegehäuse seitlich angeordneten Abtriebselemente für die Räder einer Radachse. Nach der Erfindung ist vorgesehen, dass an dem Getriebegehäuse ein erstes Paar von ersten Abtriebselementen zum Antreiben eines ersten Paares von Rädern einer ersten Radachse und ein zweites Paar von zweiten Abtriebselementen zum Antreiben eines zweiten Paares von Rädern einer zweiten Radachse angeordnet sind, dass in dem Getriebegehäuse für das erste Paar von Rädern der ersten Radachse ein erstes Differentialgetriebe und für das zweite Paar von Rädern der zweiten Radachse ein zweites Differentialgetriebe vorgesehen sind und dass zwischen dem ersten Differentialgetriebe und dem zweiten Differentialgetriebe ein Zentraldifferentialgetriebe angeordnet ist, welches zum Verteilen des Antriebsdrehmoments auf die zwei Radachsen mit dem ersten Differentialgetriebe und dem zweiten Differentialgetriebe in Verbindung steht.

## Beschreibung

Die Erfindung betrifft ein Differentialgetriebe für ein Automobil zum Verteilen eines Antriebsdrehmoments auf mindestens zwei Räder, mit einem Getriebegehäuse, einer Antriebswelle, welche ein Antriebsdrehmoment in das Getriebegehäuse einleitet, und mindestens zwei gegenüberliegende und am Getriebegehäuse seitlich angeordnete Antriebselemente für die Räder einer Radachse, gemäß dem Oberbegriff des Anspruchs 1.

Differentialgetriebe an Automobilen sind hinlänglich bekannt. Diese dienen insbesondere einer gleichmäßigen Kraftverteilung an angetriebenen Hinterrädern sowie einem Ausgleich der Radumläufe bei einer Kurvenfahrt zwischen den Rädern einer Radachse.

Die Differentialgetriebe weisen üblicherweise eine Kegelradanordnung auf, welche in einem Getriebegehäuse verbaut ist. Das Getriebegehäuse ist typischerweise etwa mittig zwischen den Rädern einer Achse angeordnet.

Der Erfindung liegt die **Aufgabe** zugrunde, ein Differentialgetriebe anzugeben, mit welchem besonders hohe Antriebskräfte zum Antrieb eines Automobils aufgebracht werden können.

Die Aufgabe wird nach der Erfindung durch ein Differentialgetriebe mit den Merkmalen des Anspruchs 1 gelöst. Bevorzugte Ausführungsformen der Erfindung sind in den abhängigen Ansprüchen angegeben.

Die erfindungsgemäße Differentialgetriebeanordnung ist dadurch gekennzeichnet, dass an dem Getriebegehäuse ein erstes Paar von ersten Abtriebselementen zum Antreiben eines ersten Paares von Rädern einer ersten Radachse und ein zweites Paar von zweiten Abtriebselementen zum Antreiben eines zweiten Paares von Rädern einer zweiten Radachse angeordnet sind, dass in dem Getriebegehäuse für das erste Paar von Rädern der ersten Radachse ein erstes Differentialgetriebe und für das zweite Paar von Rädern der zweiten Radachse ein zweites Differentialgetriebe vorgesehen sind und dass zwischen dem ersten Differentialgetriebe und dem zweiten Differentialgetriebe ein Zentraldifferentialgetriebe angeordnet ist, welches einerseits mit der Antriebswelle und andererseits zum Verteilen des Antriebsdrehmomentes auf die zwei Radachsen mit dem ersten Differentialgetriebe und dem zweiten Differentialgetriebe in Verbindung steht.

Ein Grundgedanke der Erfindung liegt darin, eine Differentialgetriebeanordnung vorzusehen, mit welcher zumindest vier Antriebsräder in effizienter und kompakter Weise antreibbar sind. In dem Getriebegehäuse sind dabei ein erstes Differentialgetriebe zur Antriebsdrehmomentverteilung an ein erstes Paar von Rädern und ein zweites Differentialgetriebe zum Antreiben eines zweiten Paares von Rädern einer zweiten Radachse vorgesehen.

Die zwei Paare von Rädern, welche insbesondere zwei Paare von Hinterrädern sind, werden dabei über eine zentrale Antriebswelle von einem Fahrzeugmotor, insbesondere einem Verbrennungsmotor, angetrieben. Dabei ist zur Verteilung der Antriebsleistung auf die zwei Differentialgetriebe ein Zentraldifferentialgetriebe vorgesehen, welches zwischen dem ersten Differentialgetriebe und dem zweiten Differentialgetriebe angeordnet ist und das an das Zentraldifferentialgetriebe übertragene Antriebsdrehmoment auf die zwei Radachsen über die zwei Differentialgetriebe verteilt. Das Zentraldifferentialgetriebe steht somit in drehmomentübertragener Verbindung sowohl mit dem ersten Differentialgetriebe als auch mit dem zweiten Differentialgetriebe. Auf diese Weise kann ein sehr hohes Antriebsdrehmoment auf zumindest vier Antriebsräder übertragen werden, so dass eine hohe Beschleunigung des Automobils erreicht werden kann.

Grundsätzlich können die einzelnen Differentialgetriebe jeweils unterschiedlich ausgebildet sein. Aus fertigungstechnischer Sicht ist es besonders vorteilhaft, dass das erste Differentialgetriebe und das zweite Differentialgetriebe gleich ausgebildet sind.

Generell können unterschiedliche Zahnradanordnungen für die einzelnen Differentialgetriebe vorgesehen werden. Besonders zweckmäßig ist es nach einer Weiterbildung der Erfindung, dass das erste Differentialgetriebe, das zweite Differentialgetriebe und/oder das Zentraldifferentialgetriebe als ein Kegelradgetriebe ausgebildet sind. Insgesamt ist eine Kegelradgetriebeanordnung vorgesehen, bei welcher Drehachsen der Kegelräder in einem rechten Winkel zueinander stehen. Derartige Kegelradgetriebeanordnungen können auch als eine Sonderform eines Planetenradgetriebes angesehen und ausgebildet werden. Hierdurch lässt sich eine gleichmäßige Verteilung eines Antriebsdrehmomentes im Geradeauslauf sowie eine Kompensation unterschiedlicher Radumläufe bei Kurvenfahrt erreichen.

Allgemein können unterschiedlichste Einbaulagen der Differentialgetriebeanordnung innerhalb eines Automobils oder Fahrzeuges vorgesehen sein. Besonders zweckmäßig ist es nach einer Weiterbildung der Erfindung, dass die Antriebswelle in einer Längsrichtung verläuft und dass die Abtriebselement für die Radachsen jeweils in einer Querrichtung gerichtet sind, welche senkrecht zur Längsrichtung gerichtet ist. Hierdurch kann ein besonders symmetrischer Aufbau und eine gute Gewichtsverteilung im Automobil erreicht werden.

Ein besonders kompakter und stabiler Aufbau ergibt sich nach einer Ausführungsvariante der Erfindung weiter dadurch, dass das Getriebegehäuse an einem Gehäuse des Fahrzeugantriebes mit einem Drehmomentwandler und/oder einer Kupplung angeflanscht ist. Es kann so insbesondere bei einer Mittelmotoranordnung ein kompakter Aufbau bei guter Gewichtsverteilung erzielt werden. Die Differentialgetriebeanordnung kann unmittelbar an den Drehmomentwandler, also das eigentliche Getriebe des Automobils, oder einer Kupplung angeflanscht sein. Alternativ kann die Differentialgetriebeanordnung in dem Getriebegehäuse des Drehmomentwandlers unmittelbar integriert sein.

Eine weitere bevorzugte Ausführungsform der Erfindung besteht darin, dass das erste Differentialgetriebe, das zweite Differentialgetriebe und/oder das Zentraldifferentialgetriebe ein elektrisch ansteuerbares Stellglied zur Einstellung einer Drehmomentverteilung und/oder eine Differentialsperre aufweist. Das Stellglied kann insbesondere dem Fahrer oder einer elektronischen Steuereinrichtung nach Vorauswahl eines entsprechenden Steuerprogramms angesteuert werden. Hierdurch kann auf die verschiedenen Räder, beispielsweise eine gewünschte Kraftverteilung erfolgen, so dass etwa eine gleich Kraftverteilung auf die vier Antriebsräder erfolgt. Zudem kann mit einer Differentialsperre eine gute Kraftübertragung auch bei einem ungleichmäßigen Untergrund sichergestellt werden.

Die Erfindung umfasst weiterhin ein Automobil, insbesondere ein Sportfahrzeug, bei welchem die zuvor beschriebene erfindungsgemäße Differentialgetriebeanordnung vorgesehen ist. Hierbei können die zuvor beschriebenen Vorteile erreicht werden.

Ein besonders vorteilhaftes Automobil ist insbesondere dadurch gegeben, dass zwei Hinterradachsen vorgesehen sind, welche in Längsrichtung zueinander versetzt sind, wobei der Versatz in Längsrichtung kleiner als ein Durchmesser der Hinterräder ist, und dass die Hinterräder der zwei Hinterradachsen über die Differentialgetriebeanordnung angetrieben sind. Es kann so eine besonders kompakte Anordnung von vier angetriebenen Hinterrädern erreicht werden, bei denen, anders als Dreiachsanordnungen bei Lastkraftwägen, die zwei Paare von Hinterrädern nicht nur axial, sondern auch radial zueinander versetzt sind. Dabei ist die Differentialgetriebeanordnung so ausgebildet, dass die je zwei Hinterräder zu jeder Seite des Differentialgetriebegehäuses mit einer eigenen Antriebswelle mit Drehmoment versorgt werden.

Besonders zweckmäßig ist es nach einer Ausführungsvariante der Erfindung, dass ein Achsabstand der Räder einer ersten Hinterradachse größer als ein Achsabstand der Räder der zweiten Hinterradachse ist und dass die Räder der zweiten Hinterradachse axial innerhalb der Räder der ersten Hinterradachse liegen. Hierdurch kann ein besonders geringer axialer Abstand der zwei Radachsen zueinander erreicht werden, wodurch weiterhin ein kleiner Wendekreis des Fahrzeuges und somit eine hohe Wendigkeit auch bei Fahrten durch Kurven mit kleinen Kurvenradien realisierbar sind.

Besonders zweckmäßig ist es nach einer Weiterbildung der Erfindung zudem, dass zumindest die Räder der zwei Hinterradachsen jeweils über eine Radantriebswelle angetrieben sind, welche innerhalb einer hohlen Radaufhängungsschwinge verläuft. Somit kann eine Radantriebswelle zumindest teilweise integriert in einer Radaufhängung, insbesondere einem Längslenker, ausgebildet werden, was einen kompakten Aufbau des Fahrzeuges weiter fördert.

Die Erfindung wird nachfolgend anhand von bevorzugten Ausführungsbeispielen weiter beschrieben, welche schematisch in den Zeichnungen dargestellt sind. In den Zeichnungen zeigen:
- Fig. 1: eine schematische Draufsicht auf ein erfindungsgemäßes Automobil;
- Fig. 2: eine perspektivische Ansicht auf ein Getriebegehäuse einer erfindungsgemäßen Differentialgetriebeanordnung; und
- Fig. 3: eine schematische Querschnittsansicht durch eine erfindungsgemäße Differentialgetriebeanordnung.

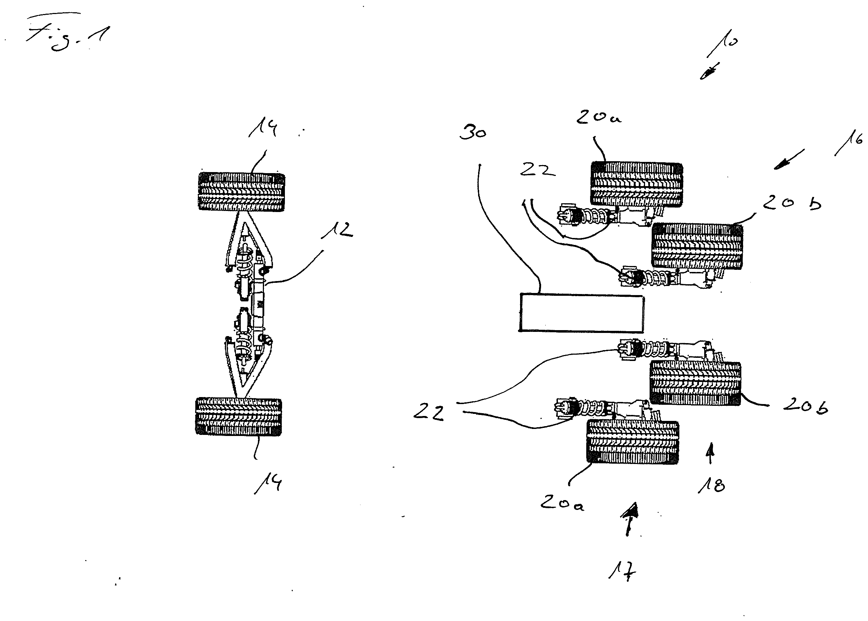

Gemäß Fig. 1 weist eine Ausführung eines erfindungsgemäßen Automobils 10 eine Vorderradachsanordnung 12 mit Vorderrädern 14 auf. Eine Hinterradanordnung 16 des Automobils 10 umfasst eine hinter erste Radachse 17 mit ersten Rädern 20a und eine hintere zweite Radachse 18 mit zweiten Rädern 20b auf. Die zweiten Räder 20b der zweiten Radachse 18 sind axial beabstandet zu den ersten Rädern 20a der ersten Radachse 17 angeordnet, wobei ein axialer Abstand der Radachsen kleiner als ein Durchmesser der Räder 20a, 20b ist, so dass in Verbindung mit dem geringeren Abstand der zweiten Räder 20b zueinander eine kompakte überlappende Anordnung der ersten Hinterräder 20a zu den innenliegenden zweiten Rädern 20b erreicht ist.

Die Räder 20a, 20b sind jeweils über eine Radaufhängeschwinge 22 gelagert, welche auch als ein Längslenker bezeichnet werden kann. Ein Antrieb der einzelnen Räder 20a, 20b erfolgt dabei über eine Antriebsanordnung, wobei eine Radantriebswelle über entsprechende Winkelgetriebe innerhalb der jeweils hohl ausgebildeten Radaufhängeschwinge 22 gelagert ist.

Von einem im Wesentlichen mittigen Antriebsmotor wird das Drehmoment an die einzelnen Rader 20a über eine Differentialgetriebeanordnung 30 verteilt, welche etwa mittig zwischen den Rädern 20 der Hinterradanordnung 16 angeordnet ist, wie schematisch in Fig. 1 gezeigt ist.

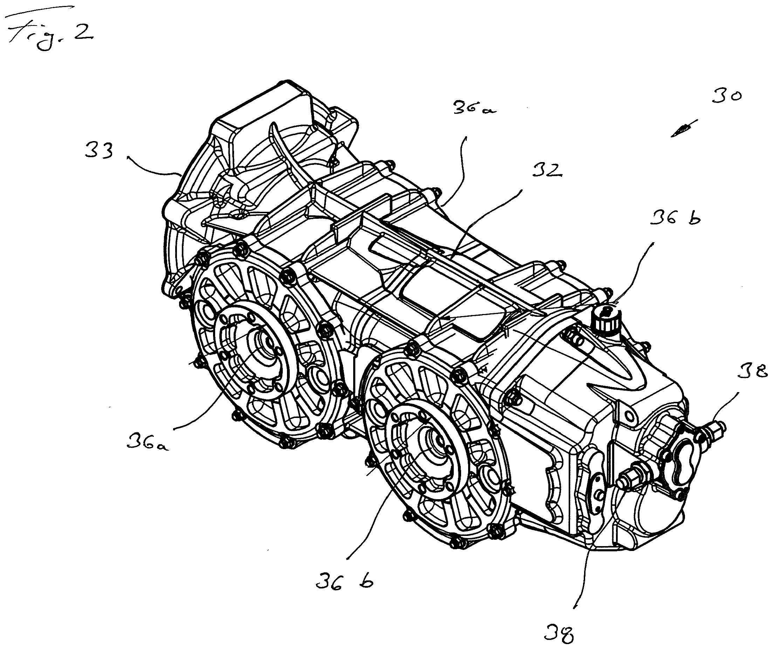

Die Differentialgetriebeanordnung 30 weist gemäß Fig. 2 ein etwa längliches Getriebegehäuse 32 auf, welches an einer Stirnseite an einem Antrieb des Automobils 10 mit einem Verbindungsflansch 33 angebracht ist. Zum Antrieb der ersten Hinterräder 20a treten aus dem Getriebegehäuse 32 schematisch angedeutete erste Abtriebselemente 36a sowie zum Antrieb der zweiten Hinterräder 20b zweite Abtriebselemente 36a aus dem Getriebegehäuse 32 aus. Über Anschlüsse können schematisch angedeutete Stellglieder 38 an der Differentialgetriebeanordnung 30 angesteuert werden, um Verstellungen an der Differentialgetriebeanordnung 30 vorzunehmen.

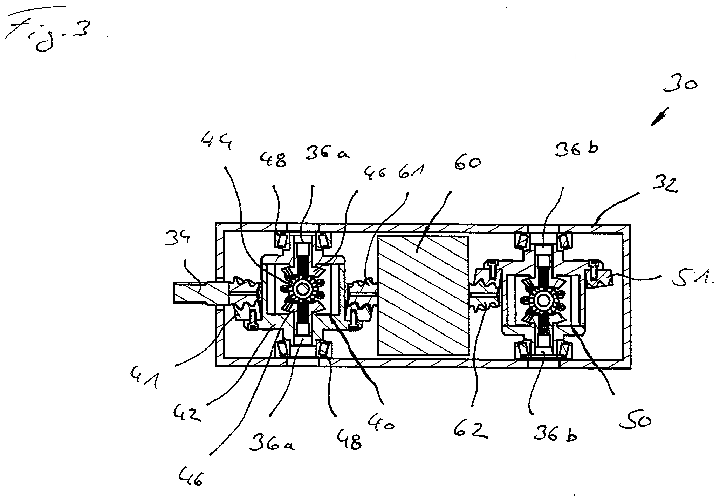

In Fig. 3 ist eine stark schematisierte Querschnittsansicht durch ein Getriebegehäuse 32 einer erfindungsgemäßen Differentialgetriebeanordnung 30 gezeigt. An einer Stirnseite erfolgt die Einleitung eines Antriebsdrehmomentes über eine schematisch angedeutete Antriebswelle 34. Die Antriebswelle 34 treibt ein erstes Kronenrad 41 einer ersten Differentialgetriebeanordnung 40 in dem Getriebegehäuse 32 an. Das Kronenrad 41 ist an einem gehäuseartigen Planetenträger 42 befestigt, an welchem in grundsätzlich bekannter Weise nur schematisch angedeutete Planetenräder 44 drehbar gelagert sind. Durch die Drehung der Antriebswelle 34 wird das Kronenrad 41 mit dem Planetenträger 42 und den daran gelagerten Planetenrädern 44 in Drehung um eine Drehachse versetzt. Hierzu ist der Planetenträger 42 mittels Lager 48 drehbar am Getriebegehäuse 32 gelagert. Die Planetenräder 44 kämmen mit zwei gegenüberliegend angeordneten Sonnenrädern 46. An den Sonnenrädern 46 des ersten Differentialgetriebes 40 sind die ersten Abtriebselemente 36a zum Antrieb der ersten Hinterräder 20a der ersten Radachse 17 drehfest angebracht.

In gleicher Weise wie das erste Differentialgetriebe 40 ist ein zweites Differentialgetriebe 50 ausgebildet, welches um 180° gedreht in dem Getriebegehäuse 32 zu dem ersten Differentialgetriebe 40 eingesetzt ist. Zwischen dem ersten Differentialgetriebe 40 und dem zweiten Differentialgetriebe 50 ist ein Zentraldifferentialgetriebe 60 angeordnet, welches eine erste Welle 61 und eine zweite Welle 62 aufweist, welche seitlich aus dem Zentraldifferentialgetriebe 60 austreten. Die erste Welle 61 kämmt dabei mit dem Kronenrad 41 des ersten Differentialgetriebes 40. Die entgegengesetzt zur ersten Welle 61 angeordnete zweite Welle 62 des Zentraldifferentialgetriebes 60 kämmt mit einem zweiten Kronenrad 51 des zweiten Differentialgetriebes 50. Das Zentraldifferentialgetriebe 60 ist so ausgebildet, dass eine gleichmäßige Drehmomentverteilung des Antriebsdrehmomentes von der Antriebswelle 34 zwischen dem ersten Kronenrad 41 und dem zweiten Kronenrad 51 und damit zwischen den ersten Abtriebselementen 36a der ersten Radachse 17 und den zweiten Abtriebselementen 36b der zweiten Radachse 18 erfolgt.

## Patentansprüche

1. Differentialgetriebeanordnung für ein Automobil (10) zum Verteilen eines Antriebsdrehmoments auf mindestens zwei Räder (20), mit
- einem Getriebegehäuse (32),
- einer Antriebswelle (34), welche ein Antriebsdrehmoment in das Getriebegehäuse (32) einleitet, und
- mindestens zwei gegenüberliegenden und am Getriebegehäuse (32) seitlich angeordneten Abtriebselemente (36) für die Räder (20) einer Radachse (17, 18),
**dadurch gekennzeichnet,**
- **dass** an dem Getriebegehäuse (32) ein erstes Paar von ersten Abtriebselementen (36a) zum Antreiben eines ersten Paares von Rädern (20a) einer ersten Radachse (17) und ein zweites Paar von zweiten Abtriebselementen (36b) zum Antreiben eines zweiten Paares von Rädern (20b) einer zweiten Radachse (18) angeordnet sind,
- **dass** in dem Getriebegehäuse (32) für das erste Paar von Rädern (20a) der ersten Radachse (17) ein erstes Differentialgetriebe (40) und für das zweite Paar von Rädern (20b) der zweiten Radachse (18) ein zweites Differentialgetriebe (50) vorgesehen sind und
- **dass** zwischen dem ersten Differentialgetriebe (40) und dem zweiten Differentialgetriebe (50) ein Zentraldifferentialgetriebe (60) angeordnet ist, welches zum Verteilen des Antriebsdrehmoments auf die zwei Radachsen (17, 18) mit dem ersten Differentialgetriebe (40) und dem zweiten Differentialgetriebe (50) in Verbindung steht.

2. Differentialgetriebeanordnung nach Anspruch 1,
**dadurch gekennzeichnet,**
**dass** das erste Differentialgetriebe (40) und das zweite Differentialgetriebe (50) gleich ausgebildet sind.

3. Differentialgetriebeanordnung nach Anspruch 1 oder 2,
**dadurch gekennzeichnet,**
**dass** das erste Differentialgetriebe (40), das zweite Differentialgetriebe (50) und/oder das Zentraldifferentialgetriebe (60) als ein Kegelradgetriebe ausgebildet ist.

4. Differentialgetriebeanordnung nach einem der Ansprüche 1 bis 3,
**dadurch gekennzeichnet,**
**dass** die Antriebswelle (34) in einer Längsrichtung verläuft und
**dass** die Abtriebselemente (36) für die Radachsen (17, 18) jeweils in einer Querrichtung gerichtet sind, welche senkrecht zur Längsrichtung gerichtet sind.

5. Differentialgetriebeanordnung nach einem der Ansprüche 1 bis 4,
**dadurch gekennzeichnet,**
**dass** das Getriebegehäuse (32) an einem Gehäuse des Fahrzeugantriebes mit einem Drehmomentwandler und/oder einer Kupplung angeflanscht ist.

6. Differentialgetriebeanordnung nach einem der Ansprüche 1 bis 5,
**dadurch gekennzeichnet,**
**dass** das erste Differentialgetriebe (40), das zweite Differentialgetriebe (50) und/oder das Zentraldifferentialgetriebe (60) ein elektrisch ansteuerbares Stellglied (38) zur Einstellung einer Drehmomentverteilung und/oder eine Differentialsperre aufweist.

7. Automobil,
**dadurch gekennzeichnet,**
**dass** eine Differentialgetriebeanordnung (30) nach einem der Ansprüche 1 bis 6 vorgesehen ist.

8. Automobil nach Anspruch 7,
**dadurch gekennzeichnet,**
**dass** zwei hintere Radachsen (17, 18) vorgesehen sind, welche in Längsrichtung zueinander versetzt sind, wobei der Versatz in Längsrichtung kleiner als ein Durchmesser der Räder (20) ist, und
**dass** die Räder (20) der zwei hinteren Radachsen (17, 18) über die Differentialgetriebeanordnung (30) angetrieben sind.

9. Automobil nach Anspruch 7 oder 8,
**dadurch gekennzeichnet,**
**dass** ein Achsabstand der Räder (20a) einer ersten Radachse (17) größer als ein Achsabstand der Räder (20b) einer zweiten Radachse (18) ist und
**dass** die Räder (20b) der zweiten Radachse (18) axial innerhalb der Räder (20a) der ersten Hinterradachse (17) liegen.

10. Automobil nach einem der Ansprüche 7 bis 9,
**dadurch gekennzeichnet,**
**dass** zumindest die Räder (20) der zwei Radachsen (17, 18) jeweils über eine Radantriebswelle angetrieben sind, welche innerhalb einer hohlen Radaufhängeschwinge verläuft.
